(19)

**Europäisches Patentamt**

**European Patent Office**

**Office européen des brevets**

(11)  **EP 4 094 823 A1**

(12)  # EUROPEAN PATENT APPLICATION

(43) Date of publication:
**30.11.2022 Bulletin 2022/48**

(21) Application number: **22176238.8**

(22) Date of filing: **30.05.2022**

(51) International Patent Classification (IPC):
**B01F 23/232** (2022.01)      **B01F 25/10** (2022.01)
**B01F 35/21** (2022.01)      **B01F 35/221** (2022.01)

(52) Cooperative Patent Classification (CPC):
**B01F 23/2323; B01F 25/10; B01F 35/2132;**
**B01F 35/2211;** B01F 2101/14; B01F 2101/305

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.05.2021 NL 2028325**

(71) Applicant: **Stichting Wetsus Intellectual Property**
**Foundation**
**8911 MA Leeuwarden (NL)**

(72) Inventors:
• **Schauberger, Jörg Walther Otto**
**8911 MA Leeuwarden (NL)**
• **Agostinho, Luewton Lemos Felicio**
**8911 MA Leeuwarden (NL)**

• **Fuchs, Elmar Christof**
**8911 MA Leeuwarden (NL)**
• **Woisetschläger, Jakob**
**8911 MA Leeuwarden (NL)**
• **Siscanu, Nicolae**
**8911 MA Leeuwarden (NL)**
• **De Kroon, Esther**
**8911 MA Leeuwarden (NL)**
• **Van de Griend, Maarten Vincent**
**8911 MA Leeuwarden (NL)**
• **Loiskandl, Willibald**
**8911 MA Leeuwarden (NL)**
• **Pecnik, Rene**
**8911 MA Leeuwarden (NL)**

(74) Representative: **Arnold & Siedsma**
**Bezuidenhoutseweg 57**
**2594 AC The Hague (NL)**

(54)  **METHOD, SYSTEM, AND USE OF SAID SYSTEM FOR ENHANCING GAS VOLUMETRIC MASS TRANSFER**

(57)    The invention relates to a method and system for enhancing gas volumetric mass transfer. The method comprises the steps of:
- providing an enhancing gas system comprising:
- an entry part comprising an entry room and a liquid inlet;
- a hyperbolic funnel operatively coupled with the entry part; and
- a back pressure regulator, which is operatively coupled with the outlet of the hyperbolic funnel;

- providing a liquid to the entry room via the liquid inlet;
- providing a gas to the entry room via a gas inlet; and
- providing a back pressure at the outlet of the hyperbolic funnel.

FIG. 2

EP 4 094 823 A1

**Description**

The present invention relates to a method, system, and use of said system for enhancing gas volumetric mass transfer. For example, the method enhances gas volumetric mass transfer in an aqueous stream.

It is known from practice to enhance a liquid stream with gas to increase the gas content of the liquid. Conventional techniques include bubbling gas through the liquid and aeration using a waterfall or fountain. Other methods or known aeration technologies range from mixers and impellers to macroscopic orifices or porous materials, whose main purpose is to transfer gas (oxygen) to a liquid. Said porous materials may be fine-pore diffusers, which have a low gas volumetric mass transfer.

Conventional methods and systems for volumetric mass transfer of gas into a liquid, also referred to dissolving gas in a liquid, involve high energy consumption compared to the amount of mass transfer. For example, the energy consumption of energy for enhancing gas volumetric mass transfer is about 45% to 75% of the total energy consumption in treating waste water.

An objective of the present invention is to provide a method for enhancing gas volumetric mass transfer that obviates or least reduces the aforementioned problems and is more efficient and/or effective compared to conventional methods and systems.

This objective is achieved with the method for enhancing gas volumetric mass transfer, wherein the method comprises the steps of:

- providing an enhancing gas system comprising:

  - an entry part comprising an entry room and a liquid inlet;
  - a hyperbolic funnel operatively coupled with the entry part; and
  - a back pressure regulator, which is operatively coupled with the outlet of the hyperbolic funnel;

- providing a liquid to the entry room via the liquid inlet;
- providing a gas to the entry room via a gas inlet; and
- providing a back pressure at the outlet of the hyperbolic funnel.

The method according to the invention for enhancing gas volumetric mass transfer may start with providing an enhancing gas system. Said enhancing gas system may comprise an entry part comprising an entry room and a liquid inlet, a hyperbolic funnel operatively coupled with the entry part, and a back pressure regulator which is operatively coupled with the outlet of the hyperbolic funnel. Together with or after the step of providing an enhancing gas system, the step of providing a liquid to the entry room via the liquid inlet is performed.

The step of providing a liquid to the entry room via the liquid inlet is followed by or combined with the step of providing a gas to the entry room via a gas inlet. Providing a gas to the entry room has the advantage that the liquid may be enhanced with gas by volumetric mass transfer. Experiments showed that the gas may be ambient air or pressurised gasses. Said gasses may for example be one or more selected from the group oxygen, nitrogen, carbon dioxide, ammonia, carbon oxide. Preferably, the gas is oxygen or carbon dioxide.

In one of the preferred embodiments according to the invention, the method comprises the step of pressurising the entry room with the desired gas. As a result the mass transfer of the gas into the liquid is increased compared to the method using ambient air or an open entry room.

The hyperbolic funnel in combination with the entry room and liquid inlet enables developing the desired vortex regime. For example, a restricted vortex regime, a twisted vortex regime, or a straight vortex regime may be achieved. An advantage of said vortex regimes is that the interface, also referred to as exchange surface, to volume ratio is increased, wherein the interface to volume ratio relates to the surface between the gas and the liquid. In other words, said ratio depends on the surface between the liquid and the gas created by the vortex regime. Thus, a larger exchange surface enables efficient and effective gas transfer.

As a result, an efficient and effective mass transfer of the gas to the liquid is achieved with the hyperbolic funnel according to the invention.

Preferably, the method according to the invention comprises the step of forming at least two phase flows extending from the entry part into the hyperbolic funnel, wherein the at least two phase flows form a multiple helix, such as a double or triple helix depending on the number of gas and liquid flows. Providing said multiple helix provides the largest interface to volume ratio. Said multiple helix is also referred to as a twisted vortex regime.

This twisted vortex regime is typically obtained when no constriction is applied to the outlet of the hyperbolic funnel and the inlet flow is stabilized such that a twisted vortex regime is obtained. It is noted that obtaining a twisted vortex regime depends on the dimensions and material of the entry part and hyperbolic funnel. The entry part and/or the hyperbolic funnel may for example be manufactured from glass, plastic, and/or metal such as aluminium, stainless steel, zinc, or copper.

It is noted that the at least two phase flows may refer to one ore more liquid flows and/or one or more gas flows.

It was found that the two phase flows originate from the step of providing a gas to the entry room via a gas inlet. Said step may include providing a single gas flow to the entry room or providing multiple gas flows to the entry room.

Another advantage of the step of forming at least two phase flows extending from the entry part into the hyperbolic funnel, wherein the at least two phase flows form a multiple helix, is that an enhanced turbulence is achieved. As a result, efficient and effective volumetric gas mass transfer may be achieved.

In order to achieve the desired vortex regime, the flow rate of the liquid may be slowly increased and/or adapted during the process. Furthermore, the liquid inlet may be adapted to achieve the desired angle between liquid inlet and entry room.

For example, the oxygen volumetric mass transfer coefficient ($K_La$) may be calculated by Equation I.

$$K_La = \frac{1}{(C_S - C)} \frac{dC}{dt} \qquad \text{EQ. 1}$$

The oxygen volumetric mass transfer coefficient is defined as variation of concentration C in mg L$^{-1}$ in time t (hour), with Cs the saturation concentration along the interface with area a.

Furthermore, $K_La$ may also be defined by Equation 2,

$$K_La = K_L \frac{A}{V} \qquad \text{EQ. 2}$$

where, $K_L$ is the liquid phase mass transfer coefficient (m/s), V is the volume (m$^3$), and A is the area of the gas/liquid interface (m$^2$).

The mass balance of oxygen in the system can be expressed by Equation 3,

$$Q \cdot C_{in} + K_La \cdot V(C_S - C_{out}) = Q \cdot C_{out} \qquad \text{EQ. 3}$$

wherein Q is the flow rate (m$^3$/s), $C_{in}$ is the concentration of dissolved oxygen in water entering the system (mg/L), and $C_{out}$ is the concentration of dissolved oxygen in water exiting the system.

The step of forming at least two phase flows extending from the entry part into the hyperbolic funnel, wherein the at least two phase flows form a multiple helix, relates to the twisted helix extending from the entry part into the hyperbolic funnel. The individual vortexes of the twisted helix may cross or overlap each other. Preferably, a substantially rotational symmetry is achieved.

A further advantage of the step of forming at least two phase flows extending from the entry part into the hyperbolic funnel, wherein the at least two phase flows form a multiple helix is that said helix enables to dissolve at least 1.5 mg/L of the desired gas. As a result, said helix may provide efficient and effective gas mass transfer into the liquid that is better as compared to conventional techniques under similar conditions.

Furthermore, it was found that the method according to the invention is energy efficient because the only energy to enhance gas volumetric mass transfer is to provide the liquid to the entry part. Therefore, the method according to the invention is environmental friendly and may be used to enhance a liquid with a desired gas in an environmental manner.

In order to provide the desired vortex regime, the liquid may enter the entry room by the liquid inlet that is positioned tangentially and at an angle relative to the horizontal. For example, the angle is between 5° to 10°, preferably wherein the angle is between 6° to 8°, more preferably wherein the angle is about 7°. It was found that such liquid inlet position provides the desired vortex regime and thus an efficient and effective gas mass transfer to the liquid.

In a presently preferred embodiment according to the invention, the method further comprises the step of measuring the liquid flow using a flow meter. Preferably, the method further comprises the step of controlling the liquid flow and/or controlling the liquid to gas ratio.

Measuring the liquid flow enables to control the liquid and/or gas input and therefore also to control the vortex regime. As a result, the desired vortex regime may be obtained and preserved for the operating time. Furthermore, this allows switching between different vortex regimes (restricted, twisted, and straight).

In addition, measuring and controlling the liquid flow may provide the need to control the gas flow in order to achieve an optimal gas mass transfer. An advantage of controlling the gas may be that an optimal use of the available gas is achieved and thus the available resources are used in an optimal manner.

In a further presently preferred embodiment according to the invention, the method further comprises the step of controlling the liquid to gas ratio.

An advantage of controlling the liquid to gas ratio is that the (gas) saturation in the liquid may be controlled. This enables a constant saturation of the gas in the liquid and thus a stable output of the hyperbolic funnel. In other words, the saturation level may be adjusted to the desired level and then said level may be maintained over a period of time.

In a further presently preferred embodiment according to the invention, the method further comprises the step of measuring the oxygen demand level using an oxygen demand sensor. Preferably, the method further comprises the steps of measuring the pH using a pH sensor and/or measuring the redox potential using a redox potential sensor.

Measuring the oxygen demand level using an oxygen demand sensor, and/or measuring the pH using a pH sensor, and/or measuring the redox potential using a redox potential sensor enables to monitor the liquid provided to the entry room and/or released from the hyperbolic funnel. As a result, the quality or properties of the final liquid may be known.

A further advantage of measuring said parameters is that said parameters may be used for a quality check of the liquid before the liquid is used for further processing and/or release of the liquid into the environment. Mismatches of said parameters with reference values may terminate or adapt the method according to the invention. Alternatively, or in combination therewith, the measurements can be used for feedforward and/or feedback control of the process.

In a further presently preferred embodiment according to the invention, the liquid is one or more selected from the group of: fresh waste water, saline waste water, fresh drinking water, ground water, river water, rain water, surface water. Preferably, the liquid is fresh waste water.

It was found that the method according to the invention may provide one or more selected from the group of: fresh waste water, saline waste water, fresh drinking water, ground water, river water, rain water, surface water to the entry room and that said water was efficiently and effectively aerated. As a result, treatment of the aerated water by micro organisms was improved. For example, treatment of aerated waste water by micro organisms was improved. Experiments showed that the waste water treated by the method according to the invention was treated up to 15% more efficiently compared to conventional aerated waste water using the same amount of energy for aerating the waste water.

In a further presently preferred embodiment according to the invention, the method further comprises the step of providing a gas flow and/or an air flow to the entry room, preferably comprising the step of providing an oxygen flow to the entry room.

To further increase the volumetric gas mass transfer into the liquid, the method according to the invention may actively provide a gas flow and/or an air flow to the entry room. Providing a gas flow and/or air flow may include providing pressurised gas or air to the entry room. The step of providing a gas flow and/or air flow to the entry room enables efficient and effective solvation of the provided gas and/or (ambient) air.

Preferably, the method according to the invention comprises the step of providing an oxygen flow to the entry room. Said flow may be provided actively to the entry room by using pressurised oxygen. It was found that (actively) providing oxygen to the entry room, an efficient and effective aerated liquid was achieved.

In a further presently preferred embodiment according to the invention, the hydraulic retention time in the hyperbolic funnel is in the range of 10 seconds to 60 seconds, preferably 10 seconds to 40 seconds.

It was found that an efficient and effective gas volumetric mass transfer was achieved with an hydraulic retention time in the hyperbolic funnel in the range of 10 seconds to 60 seconds, preferably 10 seconds to 40 seconds. Therefore, a high throughput may be achieved with the method according to the invention.

In a further presently preferred embodiment according to the invention, the back pressure is provided in the range of 0 mbar to 100 mbar, preferably is provided in the range of 2.5 mbar to 80 mbar, more preferably is provided in the range of 20 mbar to 80 mbar, even more preferably is provided in the range of 50 mbar to 75 mbar. Preferably, the back pressure is provided by a pressure gauge.

Providing a back pressure in the range of 0 mbar to 100 mbar, preferably is provided in the range of 2.5 mbar to 80 mbar, more preferably is provided in the range of 20 mbar to 80 mbar, even more preferably is provided in the range of 50 mbar to 75 mbar enabled to achieve the desired vortex regime, such as a restricted regime, twisted regime, or straight regime.

An advantage of providing a back pressure is that the method may switch between different vortex regimes. As a result, the method according to the invention may provide a vortex regime on demand.

In another preferred embodiment, a back pressure of about 0 mbar is provided to achieve a twisted vortex regime.

Preferably, the liquid is provided to the entry room at a flow rate in the range of 5 L min⁻¹ to 50 L min⁻¹, preferably at a flow rate in the range of 10 L min⁻¹ to 40 L min⁻¹, more preferably at a flow rate in the range of 10 L min⁻¹ to 30 L min⁻¹. Preferably, the hyperbolic funnel is 94 cm long, has a top radius of 15 cm, and outlet radius of 0.8 cm.

It was found that a flow rate in the range of 5 L min⁻¹ to 50 L min⁻¹, preferably at a flow rate in the range of 10 L min⁻¹ to 40 L min⁻¹, more preferably at a flow rate in the range of 10 L min⁻¹ to 30 L min⁻¹ results in an efficient and effective gas volumetric mass transfer.

In a further presently preferred embodiment according to the invention, the method further comprises the step of logging and/or controlling the volumetric gas mass transfer, wherein the sensors and/or flow meter provides data to a computer which is configured for logging and/or controlling the liquid flow, backpressure, and/or gas flow.

The invention also relates to a system for enhancing gas volumetric mass transfer, the system being capable of performing the method in one or more embodiments according to the invention, wherein the system comprises:

- an entry part comprising an entry room and a liquid inlet positioned at a side of the entry room;
- a hyperbolic funnel operatively coupled with the entry part;
- a back pressure regulator, which is operatively coupled with the outlet of the hyperbolic funnel; and
- a regulator configured for regulating the liquid flow.

The system provides the same effects and advantages as those described for the method.

It is noted that a side of the entry room may be a side wall or the top of the entry room.

A further advantage of the system according to the invention is that the system may be adapted to specific needs of the customer.

Furthermore, the system according to the invention may operate continuously. This results in an efficient and effective gas volumetric mass transfer. In addition, the system according to the invention is scalable. For example, multiple systems may be placed in series or parallel. Therefore, the desired volume may be processed and thus the system may be tuned to the volume to be processed.

In a preferred embodiment according to then invention, the system further comprises a vortex regime analyser. Preferably, said vortex regime analyser may be operatively coupled with a computer, wherein the computer is configured to log or control the vortex regime inside the hyperbolic funnel by tuning the liquid flow, gas flow, and/or angle of the liquid inlet with the entry part.

An advantage of a vortex regime analyser is that the type of vortex regime may be determined within the hyperbolic funnel. For example, a vortex regime analyser may be a laser, camera, and/or infrared spectrometer.

As a result, an operator or computer may change of tune the vortex regime to provide an optimal interface, also referred to as exchange surface, to volume ratio.

In a preferred embodiment according to the invention, the system further comprises a flow meter operatively coupled with the liquid inlet.

Providing a flow meter which is operatively coupled with the liquid inlet enables to detect the flow of the liquid. An advantage of the flow meter is therefore that the flow of the liquid may be adjusted, such that the desired flow and thus the desired vortex regime may be achieved.

It is noted that the flow meter may be configured between the liquid inlet and the regulator or before the regulator. Preferably, the flow meter is configured between the liquid inlet and the regulator.

In a preferred embodiment according to the invention, the system further comprises at least one sensor configured for measuring the oxygen demand level and/or pH and/or redox potential of the liquid.

An advantage of measuring the oxygen demand level and/or pH and/or redox potential of the liquid is that the liquid may be analysed during the volumetric gas mass transfer. As a result, the process may be adjusted during operation. This allows anticipating to changes in composition of the liquid provided to the entry part.

In a preferred embodiment according to the invention, the regulator comprises a control valve which is configured to adjust the amount provided to the liquid inlet.

An advantage of the control valve is that the amount of liquid provided to the entry part may be controlled. This enables to provide the desired vortex regime.

In a preferred embodiment according to the invention, the system further comprises a gas inlet coupled to a gas source and configured to provide gas to the entry room.

Providing the system according to the invention with a gas inlet coupled to a gas source and configured to provide gas to the entry room, enables to dissolve different gasses in the liquid. For example, the oxygen, nitrogen, carbon dioxide, ammonia, carbon oxide gas may be used. Preferably, the gas is oxygen or carbon dioxide is applied to the entry room.

As a result, the desired gas or desired multiple gasses may be provided to the entry room.

It is noted that pressurised air may also be used.

In a preferred embodiment according to the invention, the liquid inlet is tangential, wherein the liquid inlet is positioned at an angle with the horizontal, wherein the angle is 5° to 10°, preferably wherein the angle is 6° to 8°, more preferably wherein the angle is about 7°. Preferably, the hyperbolic funnel has a length in the range of 90 cm to 100 cm, has an entry room radius in the range of 10 cm to 20 cm, and has an outlet radius in the range of 0.6 cm to 1 cm.

It is noted that an angle of about 7° may refer to an angle of substantially 7°.

It was found that the desired vortex regime, restricted, twisted, or straight, was efficiently and effectively achieved when the liquid inlet is tangential, wherein the liquid inlet is positioned at an angle with the horizontal, wherein the angle is 5° to 10°, preferably wherein the angle is 6° to 8°, more preferably wherein the angle is about 7°.

Furthermore, the volumetric gas mass transfer was even further enhanced using a hyperbolic funnel with a length in the range of 90 cm to 100 cm, has an entry room radius in the range of 10 cm to 20 cm, and has an outlet radius in the range of 0.6 cm to 1 cm. Most preferably, the hyperbolic funnel is 94 cm long, has a top radius of 15 cm, and outlet radius of 0.8 cm.

Preferably, the computer may log and analyse the data received from the sensors and/or flow meter and/or vortex regime analyser and/or control and tune the liquid flow and/or the gas flow in order to provide optimal conditions to enhance volumetric gas mass transfer.

Alternatively, the volumetric gas mass transfer may be further enhanced using a hyperbolic funnel with a dimensions ratio of length : entry room radius : outlet radius of 450 to 500 : 50 to 100 : 3 to 5, or similar geometric ratios.

The invention also relates to use of the system according to the invention to perform the method according to the invention to increase the oxygen level in a water stream. Preferably, the water stream is one or more selected from the group of: fresh waste water, saline waste water, fresh drinking water, ground water, river water, rain water, surface water, more preferably the water stream is a waste water stream, even more preferably the water stream is a saline waste water stream.

The use of the system provides the same effects and advantages as those described for the system and the method.

It was found that the system according to the invention applying the method according to the invention enables efficient and effective increase of the oxygen level in the liquid. As a result, treatment of for example waste water is increased. Said treatment may for example be performed by micro-organisms which require oxygen.

Furthermore, the system according to the invention performing the method according to the invention may also be used to perform an oxidation reaction including iron. The liquid may be enhanced with oxygen, wherein the oxygen enhanced liquid increases the rate of the oxidation reaction. As a result, iron oxide is formed in an efficient and effective manner. An advantage of the formation of iron oxide is that the iron oxide may be efficiently filtered from the liquid. Therefore, the system and method according to the invention enable efficient and effective iron reduction in the liquid.

Another advantage is that iron may be harvested from a waste stream. As a result, valuable material may be recovered from the waste stream and recycled.

In a preferred embodiment, the system according to the invention performing the method according to the invention may also be used to perform anaerobic ammonium oxidation. This enables to remove ammonium from a waste stream.

In another preferred embodiment, the system according to the invention to perform the method according to the invention may be used to increase the oxygen level in saline water. The saline water with increased oxygen level may be used in a fish farm and/or vessels to transport living fish such as tuna.

In another preferred embodiment, the system according to the invention to perform the method according to the invention may be used to increase the carbon dioxide level in a liquid stream. Preferably, the liquid stream is a soda stream.

Therefore, the system and method according to the invention may be used to provide carbonated beverages in an efficient and effective manner. In fact, it was found that the carbonated beverages required less pressurising of the holding container. Therefore, the holding containers are less likely to burst or break.

Further advantages, features and details of the invention are elucidated on the basis of preferred embodiments thereof, wherein reference is made to the accompanying drawings, in which:

- Figure 1 shows a schematic overview of the method according to the invention;
- Figure 2 shows a schematic overview of the system according to the invention;
- Figure 3 shows the outlet redox potential and dissolved oxygen values for different vortex regimes (straight, twisted, restricted);
- Figure 4 shows oxygen volumetric mass transfer coefficient ($K_L a$) and the standard oxygen transfer rate (SOTR) at different flow rates; and
- Figure 5 shows the dissolved oxygen curves and $K_L a$ plotted for a twisted vortex regime at 20 °C.

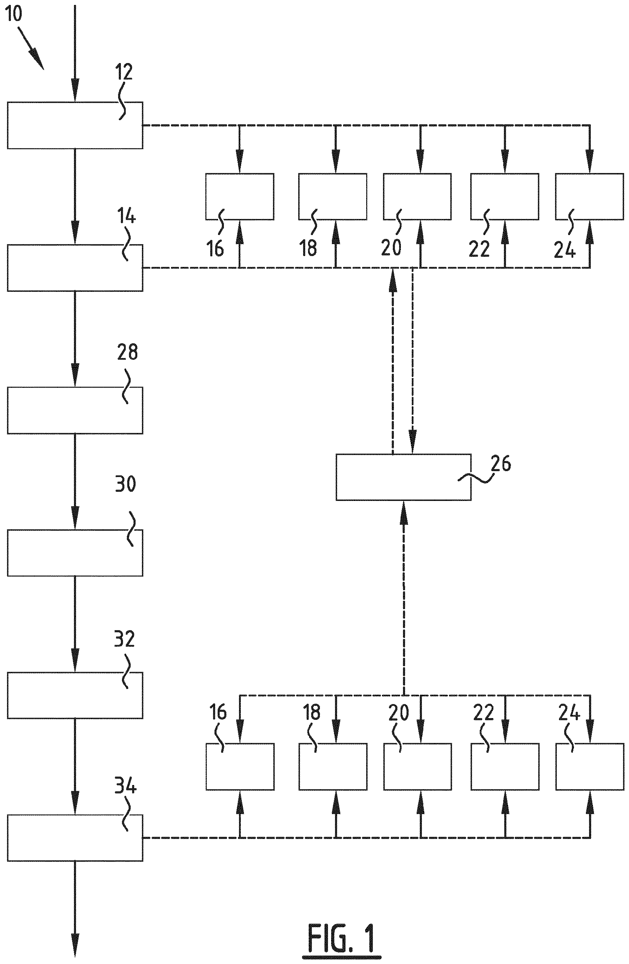

Method 10 (Figure 1) for enhancing gas volumetric mass transfer follows a sequence of different steps.

In the illustrated embodiment method 10 may start with step 12 of providing an enhancing gas system.

Step 12 of providing an enhancing gas system may be followed by step 14 of providing a liquid to the entry room via the liquid inlet. The liquid provided to the entry room may be measured and/or analysed and/or controlled. Said measuring and/or analysing and/or controlling may be performed by step 16 of measuring the liquid flow using a flow meter and/or step 18 of and/or step 20 of measuring the oxygen demand level using an oxygen demand sensor and/or step 22 of measuring the pH using a pH sensor and/or step 24 of measuring the redox potential using a redox potential sensor.

Any one of steps 16, 18, 20, 22, 24 may be followed by controlling step 26, wherein step 26 of controlling the liquid flow and/or controlling the liquid to gas ratio provides feedback to the liquid inlet to adjust the flow and/or gas inlet to adjust the gas provided to the entry room.

Furthermore, step 14 of providing a liquid to the entry room via the liquid inlet may be followed by step 28 of providing a gas to the entry room via a gas inlet. Step 28 may comprise step 30 of providing a gas flow and/or an air flow to the entry room, preferably comprising the step of providing an oxygen flow to the entry room.

Step 30 may be followed by step 32 of providing a back pressure at the outlet of the hyperbolic funnel and step 34 of withdrawing the enhanced liquid from the system according to the invention.

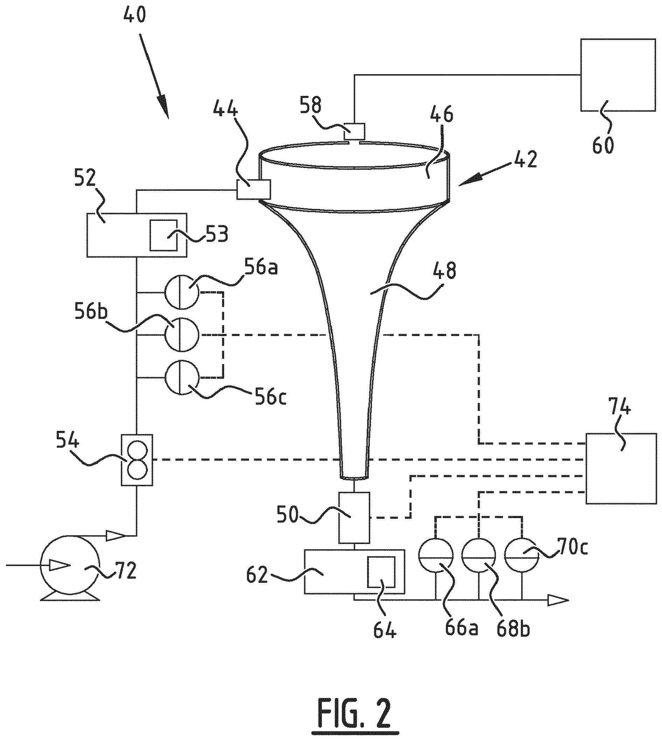

System 40 (Figure 2) comprises entry part 42 including entry room 46 and liquid inlet 44. In the schematic overview of figure 2, liquid inlet 44 is positioned at a side of entry room 46. Furthermore, system 40 further comprises hyperbolic funnel 48 and back pressure regulator 50. Hyperbolic funnel 48 is operatively coupled with entry part 42 and back pressure regulator 50 is operatively coupled with the outlet of hyperbolic funnel 48.

In addition, system 40 further comprises regulator 52 and/or 62 for regulating the liquid flow. Regulator 52 and/or 62 may comprise control valve 53 and/or 64 which are configured to adjust the amount provided to liquid inlet 44 and/or removed from hyperbolic funnel 48. Regulator 52 and/or 62 may be a valve. Furthermore, system 40 may comprise flow meter 54 which is configured for determining the flow of the liquid and is operatively coupled with liquid inlet 44. In the illustrated embodiment of Figure 2, flow meter 54 is configured before regulator 52.

In addition, liquid may be pumped through system 40 by pump 72, wherein pump 72 is operatively coupled with flow meter 54.

In an alternative embodiment flow meter 54 is configured between liquid inlet 44 and regulator 52, and pump 72 is operatively coupled with regulator 52.

System 40 may further comprise pH sensor 56a, 66a, oxygen demand level sensor 56b, 68b, and redox potential sensor 56c, 70c, wherein said sensors are configured for measuring the pH, oxygen demand level, and redox potential respectively before inlet 44 and/or after back pressure 50. These sensors may be operatively coupled with computer 74. Furthermore, computer 74 may also be operatively coupled with flow meter 54.

Furthermore, system 40 may further comprise vortex regime analyser 76, which is enabled to analyse the vortex regime inside hyperbolic funnel 48.

Computer 74 acts as controller 75 and controls regulators 52, 62 and/or valves 53, 64 preferably based on measurements of sensors 56a, 56b, 56c, 66a, 68b, 70c and/or flow meter 54 and/or vortex regime analyser 76.

Furthermore, system 40 comprises gas inlet 58 which is coupled to gas source 60 and is configured to provide gas to entry room 46.

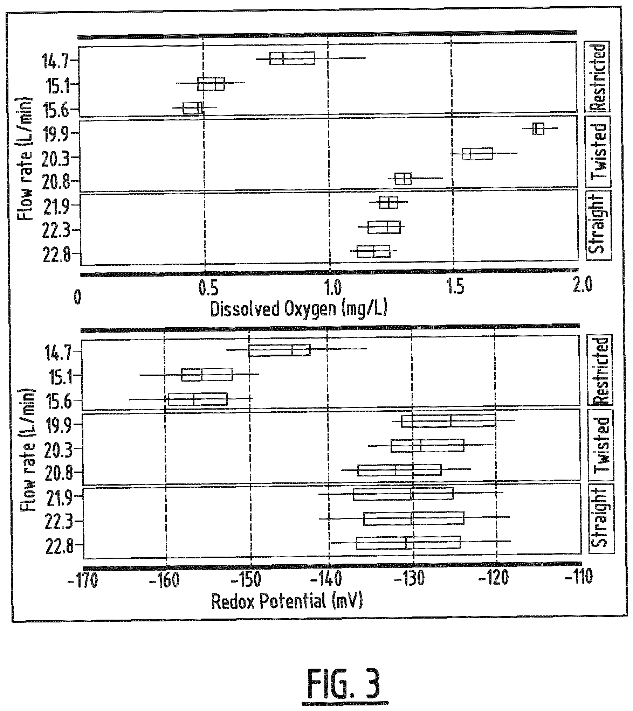

Experiments have been performed with the setup shown in figure 2. Figure 3 shows in the upper graph the outlet dissolved oxygen (mg/L) versus flow rate (L/min) of the liquid. Furthermore, the lower graph of figure 3 shows the outlet redox potential (mV) versus the flow rate (L/min) of the liquid. In addition, the upper and lower graphs are divided in three sections. The bottom section refers to a straight vortex regime, the middle section refers to a twisted vortex regime, and the top section refers to a restricted vortex regime.

Furthermore, the outlet dissolved oxygen concentration reaches its highest values (about 2 mg L$^{-1}$) inside the twisted regime. This regime presents the largest area-to-volume ratio and also presents a double helix interface which indicates enhanced turbulence, thus also enhanced advection. At a flow rate of 20.8 L/min the outlet of the dissolved oxygen values obtained for the twisted regimeratio are similar compared to those obtained with the straight regime (around 1.5 mg/L). At this flow rate the twisted interface is not completely developed, thus the area-to-volume ratio is similar to what is seen in the straight regime. The low dissolved oxygen levels obtained at the restricted regime are due to the small interface area. The outlet redox potential behaviour follows a similar trend as dissolved oxygen, indicating that oxygen is the dominant oxidation agent in the system. This is expected because the system is fed with anoxic ground water which analysis did not indicate the presence of other (strong) oxidants. The low (negative) redox values at both inlet and outlet are due to a combination of low dissolved oxygen concentrations and high concentrations of $Fe^{2+}$.

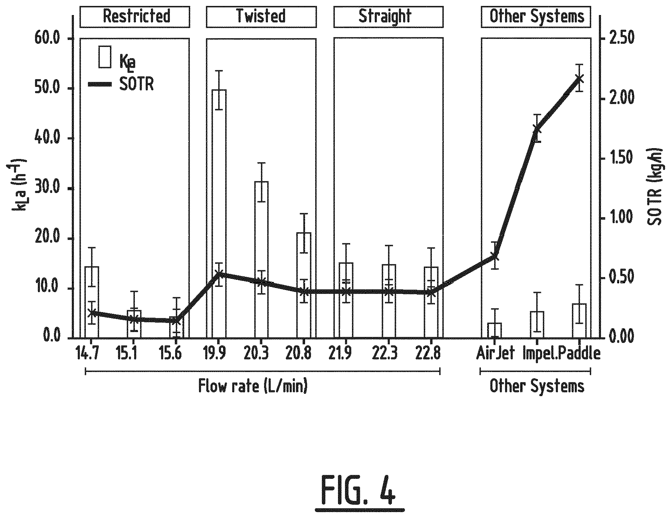

Figure 4 shows $K_L a$ (h$^{-1}$) and SOTR (kg/h) values dependent on flow rate, in other words, the flow rate (L/min) is plotted versus $K_L a$ (h$^{-1}$) (bars) or plotted versus SOTR (kg/h) (line). Average $K_L a$ values for (conventional) Air Jet, Impellers and Paddle aerators are shown for comparison. Furthermore, figure 4 comprises four columns, from left to right these columns refers to a restricted vortex regime, twisted vortex regime, straight vortex regime, other systems for gas mass transfer.

The following experimental conditions were applied: T = 13°C, P = 1 atmosphere and dissolved oxygen inlet (DOinlet) = 0.02 mg/L (see Table 1).

Table 1: Characteristics of the different regimes

| Vortex regime | Flow rate (L/min) | | Back pressure (mbar) | | Hydraulic retention time (s) | |
|---|---|---|---|---|---|---|
| | Min | Max | Min | Max | Min | Max |
| Restricted | 14.7 | 15.7 | 68 | 70 | 21 | 37 |

(continued)

| Vortex regime | Flow rate (L/min) | | Back pressure (mbar) | | Hydraulic retention time (s) | |
|---|---|---|---|---|---|---|
| | Min | Max | Min | Max | Min | Max |
| Twisted | 19.9 | 20.9 | 0 | 2.5 | 14 | 22 |
| Straight | 22 | 23 | 2.5 | 5 | 29 | 30 |

Table 1 summarizes the different characteristics of each regime regarding their flow window and back pressure. The air volume for each situation was calculated from a visual analysis of the interfaces assuming rotational symmetry.

The plot shows that the $K_La$ values obtained with the free surface vortex in a hyperbolically shaped funnel are considerably higher than those from the three other commercial systems used as reference, especially for the twisted regime. These high oxygen transfer rates are a consequence of the aforementioned combination of high area-to-volume ratios and enhanced turbulence close to the interface. On the other hand, the SOTR values (up to 0.5 kg/h) are comparable to Air Jet system but much lower than those reported for Impeller and Paddle systems (between 1.0 and 2.5 kg/h). This is due to the short hydraulic retention times in the hyperbolic funnel (typically less than a minute). For applications where this low SOTR is an issue, a cascade of funnels may be applied, which would multiply the hydraulic retention time with a factor representing the number of funnels whilst maintaining the flow regime and thus the $K_La$ value. It was found that an increased throughput can be achieved with a parallel arrangement of funnels or funnel cascades.

The largest interface to volume ratio is created in the so called "twisted" regime. This regime is obtained when no constriction is applied to the outlet valve and the inlet flow is stabilized at approximately 20 L/min. This regime is characterized by a large air volume (around 51% of the total system volume). Another characteristic observed for this regime is the formation of a double helix shaped interface. In the straight regime the interface to volume ratio is much smaller, around 94% of the total funnel volume is occupied by water. It can be obtained when the flow is stabilized at approximately 22 L/min and no restriction is applied to the system outlet. In this system the interface is rather smooth (no double helix shape observed) and it prolongs until the system outlet. The restricted regime received its denomination due to the fact that a small backflow pressure of around 70 mbar was applied by constricting the outlet tubing. Its surface to volume ratio is slightly lower than that of the straight regime, since the air core does not extend until the system outlet. It stops somewhere mid-way and breaks-up forming bubbles which travel down exiting the system via its outlet. It is formed when the inlet flow is stabilized at approximately 15 L/min.

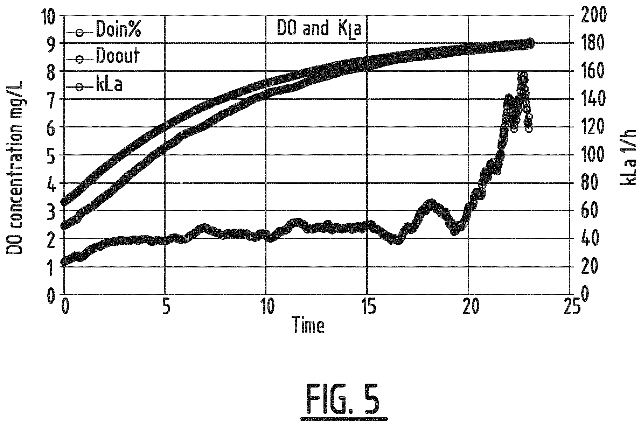

Figure 5 shows dissolved oxygen and $K_La$ in an aeration experiment versus time (t). One time unit equals 165 seconds. From the curve, it can be observed that the oxygen in (middle line at t = 0) and out (top line at t =0) follow a logarithmic trend. The final value is reaching substantially to the saturation limit of 9.1 mg/L, which is the typical saturation concentration at 20 °C for water. The dissolved oxygen concentrations in and out start at 2.5 mg/L and 3.3 mg/L respectively, reaching convergence at 9 mg/L. Figure 5 also shows a representation of the $K_La$ (bottom line at t = 0) calculated.

In a further experiment, different size funnels have been used. The dimensions of the funnels are provided in Table 2.

Table 2: Dimensions funnels

| Size | Small funnel | Medium funnel | Big funnel |
|---|---|---|---|
| Inlet diameter | 9 mm | 17 mm | 30 mm |
| Outlet diameter | 5 mm | 17 mm | 30 mm |
| Cylinder diameter | 153 mm | 300 mm | 600 mm |
| Cylinder height | 68 mm | 117 mm | 220 mm |
| Funnel height | 193 mm | 940 mm | 1290 mm |
| Total height | 261 mm | 1057 mm | 1510 mm |

Different flow regimes were provided to the medium funnel and big funnel by setting different low rates. Said flow regimes are provided in Table 3.

Table 3: Flow rates of different flow regimes

| Flow regime | Flow rate small funnel | Flow rate medium funnel | Flow rate big funnel |
|---|---|---|---|
| Restricted Schauberger | 0.95 - 1.2 L/min | 14.7 - 15.7 L/min | 44 - 49 L/min |
| Twisted Schauberger | 1.25 - 1.3 L/min | 19.9 - 20.9 L/min | 65 - 77 L/min |
| Straight Schauberger | 1.5 - 1.8 L/min | 22.0 - 23.0 L/min | 90 - 100 L/min |

In the different regimes the following oxygen transfer coefficients ($K_L a$) per hour can be achieved for the small funnel and medium funnel.

It is noted that the $K_L a$ at 20 °C are corrected values, wherein said values are derived from the $K_L a$ at 13 °C.

Table 4: $K_L a$ values of medium size funnel

| | Small funnel | | Medium funnel | |
|---|---|---|---|---|
| Flow regime | $K_L a$ (T = 13 °C) | Hydraulic retention time | $K_L a$ (T = 13 °C) | $K_L a$ (T = 20 °C) |
| Restricted Schauberger | 3.0 - 6.5 ($h^{-1}$) | 39.3 - 43.9 (s) | 4.7 - 13.8 ($h^{-1}$) | 5.5 - 16.4 ($h^{-1}$) |
| Twisted Schauberger | 22.6 - 29.0 ($h^{-1}$) | 30.6 - 36.6 (s) | 21.8 - 52.5 ($h^{-1}$) | 25.8 - 62.3 ($h^{-1}$) |
| Straight Schauberger | 17.0 - 22.4 ($h^{-1}$) | 33.8 - 43.8 (s) | 15.1 - 16.0 ($h^{-1}$) | 17.9 - 19.0 ($h^{-1}$) |

Table 4 shows that an efficient and effective method for enhancing gas volumetric mass transfer was achieved.

In the medium funnel, the aeration capabilities of the vortex were used to oxidize $Fe^{2+}$ of natural ground water to $Fe^{3+}$. Depending on the pH and the regime, the oxidation efficiencies of Table 5 were achieved.

Table 5: Iron oxidation efficiencies of medium funnel

| Flow regime | pH 6.9 | pH 7.3 | pH 7.7 | pH 8.1 | pH 8.5 | pH 8.9 |
|---|---|---|---|---|---|---|
| Restricted Schauberger | 3.4% | 4.0% | 4.5% | 4.5% | 9.2% | 26.7% |
| Twisted Schauberger | 6.3% | 7.8% | 9.3% | 12.5% | 18.5% | 55.8% |
| Straight Schauberger | 4.7% | 6.2% | 6.5% | 7.7% | 11.3% | 34.7% |

The abovementioned experiment shows that the method for enhancing gas volumetric mass transfer according to the invention is efficient and effective. Furthermore, it is noted that the higher pH will increase the oxidation efficiencies even further.

The present invention is by no means limited to the above described preferred embodiments and/or experiments thereof. The rights sought are defined by the following claims within the scope of which many modifications can be envisaged.

**Claims**

1. Method for enhancing gas volumetric mass transfer, comprising the steps of:

   - providing an enhancing gas system comprising:

      - an entry part comprising an entry room and a liquid inlet;
      - a hyperbolic funnel operatively coupled with the entry part; and
      - a back pressure regulator, which is operatively coupled with the outlet of the hyperbolic funnel;

   - providing a liquid to the entry room via the liquid inlet;
   - providing a gas to the entry room via a gas inlet; and
   - providing a back pressure at the outlet of the hyperbolic funnel.

2. Method according to claim 1, further comprising the step of forming at least two phase flows extending from the entry part into the hyperbolic funnel, wherein the at least two phase flows form a multiple helix.

3. Method according to any one of the preceding claims, further comprising the step of measuring the liquid flow using a flow meter, and/or further comprising the step of controlling the liquid flow and/or controlling the liquid to gas ratio.

4. Method according to any one of the preceding claims, further comprising the step of measuring the oxygen demand level using an oxygen demand sensor.

5. Method according to any one of the preceding claims, further comprising the step of measuring the pH using a pH sensor.

6. Method according to any one of the preceding claims, further comprising the step of measuring the redox potential using a redox potential sensor.

7. Method according to any one of the preceding claims, wherein the liquid is one or more selected from the group of: fresh waste water, saline waste water, fresh drinking water, ground water, river water, rain water, surface water.

8. Method according to any one of the preceding claims, further comprising the step of providing a gas flow and/or an air flow to the entry room, preferably comprising the step of providing an oxygen flow to the entry room.

9. Method according to any one of the preceding claims, wherein the hydraulic retention time in the hyperbolic funnel is in the range of 10 seconds to 60 seconds, preferably 10 seconds to 40 seconds, and/or wherein the back pressure is provided in the range of 0 mbar to 100 mbar, preferably is provided in the range of 2.5 mbar to 80 mbar, more preferably is provided in the range of 20 mbar to 80 mbar, even more preferably is provided in the range of 50 mbar to 75 mbar.

10. System for enhancing gas volumetric mass transfer, comprising:

   - an entry part comprising an entry room and a liquid inlet positioned at a side of the entry room;
   - a hyperbolic funnel operatively coupled with the entry part;
   - a back pressure regulator, which is operatively coupled with the outlet of the hyperbolic funnel; and
   - a regulator configured for regulating the liquid flow.

11. System according to claim 10, further comprising a flow meter operatively coupled with the liquid inlet, and/or further comprising at least one sensor configured for measuring the oxygen demand level and/or pH and/or redox potential of the liquid.

12. System according to claim 10 or 11, wherein the regulator comprises a control valve which is configured to adjust the amount provided to the liquid inlet.

13. System according to any one of the claims 10 to 12, further comprising a gas inlet coupled to a gas source and configured to provide gas to the entry room.

14. System according to any one of the claims 10 to 13, wherein the liquid inlet is tangential, wherein the liquid inlet is positioned at an angle with the horizontal, wherein the angle is 5° to 10°, preferably wherein the angle is 6° to 8°, more preferably wherein the angle is about 7°, and/or wherein the hyperbolic funnel has a length in the range of 90 cm to 100 cm, has an entry room radius in the range of 10 cm to 20 cm, and has an outlet radius in the range of 0.6 cm to 1 cm.

15. Use of a system according to any one of the claims 10 to 14 to perform the method according to any one of the claims 1 to 9 to increase the oxygen level in a water stream.

EP 4 094 823 A1

FIG. 1

11

FIG. 2

FIG. 3

FIG. 4

FIG. 5

Europäisches
Patentamt

European
Patent Office

Office européen
des brevets

# EUROPEAN SEARCH REPORT

**Application Number**

EP 22 17 6238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 524 088 A1 (MUDDY RIVER TECHNOLOGIES INC [CA]; LADOUCEUR NELS ROBERT [CA]) 22 April 2006 (2006-04-22) * page 1, line 6 – line 7 * * page 3, line 3 – line 29 * * page 5, line 22 – page 8, line 6 * * figures 1-4D * | 1-15 | INV. B01F23/232 B01F25/10 B01F35/21 B01F35/221 |
| X | DE 196 15 065 A1 (KASANMASCHEFF WALTER [DE]) 23 October 1997 (1997-10-23) * column 1, line 3 – line 5 * * column 2, line 62 – column 3, line 27 * * figure * | 1-15 | |
| A | EP 0 312 642 A1 (HARRIER INC [US]) 26 April 1989 (1989-04-26) * page 1, line 1 – line 5 * * page 3, line 37 – page 4, line 33 * * page 3, line 27 – page 4, line 33 * * figures 1-7 * | 1-15 | |

-----

-----

-----

**TECHNICAL FIELDS SEARCHED (IPC)**

B01F

The present search report has been drawn up for all claims

| Place of search | Date of completion of the search | Examiner |
|---|---|---|
| The Hague | 14 October 2022 | Real Cabrera, Rafael |

EPO FORM 1503 03.82 (P04C01)

## ANNEX TO THE EUROPEAN SEARCH REPORT
## ON EUROPEAN PATENT APPLICATION NO.

EP 22 17 6238

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2022

| Patent document cited in search report | | | Publication date | Patent family member(s) | | | Publication date |
|---|---|---|---|---|---|---|---|
| CA 2524088 | A1 | | 22-04-2006 | NONE | | | |
| DE 19615065 | A1 | | 23-10-1997 | NONE | | | |
| EP 0312642 | A1 | | 26-04-1989 | CN | 1033577 | A | 05-07-1989 |
| | | | | DD | 297774 | A5 | 23-01-1992 |
| | | | | EP | 0312642 | A1 | 26-04-1989 |
| | | | | JP | 2510701 | B2 | 26-06-1996 |
| | | | | JP | H01199634 | A | 11-08-1989 |
| | | | | KR | 890006293 | A | 12-06-1989 |
| | | | | ZA | 887848 | B | 26-07-1989 |

EPO FORM P0459

For more details about this annex : see Official Journal of the European Patent Office, No. 12/82